# FASCICULE DE BREVET EUROPEEN

(11) **EP 4 139 166 B1**
(45) Date de publication et mention de la délivrance du brevet: **06.05.2026**
(21) Numéro de dépôt: 21719672.4
(22) Date de dépôt: 22.04.2021
(51) Int. Cl.: B60Q 1/14, G06T 9/00, H04L 12/40

(54) **PROCÉDÉ DE GESTION DE DONNÉES D'IMAGE ET SYSTÈME D'ECLAIRAGE DE VEHICULE**
VERFAHREN ZUR VERWALTUNG VON BILDDATEN UND FAHRZEUGBELEUCHTUNGSSYSTEM
METHOD FOR MANAGING IMAGE DATA, AND VEHICLE LIGHTING SYSTEM

(30) Priorité: 23.04.2020 FR 2004087
(43) Date de publication de la demande: 01.03.2023
(73) Titulaire: VALEO VISION, 93012 Bobigny Cedex (FR)
(72) Inventeur: ALMEHIO, Yasser, 93012 BOBIGNY - Cedex (FR); PRAT, Constantin, 93012 BOBIGNY - Cedex (FR); DREZET, Matthieu, 93012 BOBIGNY - Cedex (FR)
(74) Mandataire: Valeo Visibility
(86) Numéro de dépôt international: PCT/EP2021/060606
(87) Numéro de publication internationale: WO 2021/214260

(56) Documents cités:
- CN-U- 206 884 861
- US-A1- 2020 084 854
- POTH MIKLOS ED - ANONYMOUS: "Comparison of Convolutional Based Interpolation Techniques in Digital Image Processing", INTELLIGENT SYSTEMS AND INFORMATICS, 2007. SISY 2007. 5TH INTERNATIONA L SYMPOSIUM ON, IEEE, PI, 1 August 2007 (2007-08-01), pages 87 - 90, XP031142321, ISBN: 978-1-4244-1442-0

## Description

Cette invention est liée au domaine des systèmes d'éclairage de véhicule, et plus particulièrement à la gestion des données d'image pour le contrôle de sources d'éclairage d'un véhicule.

Le document US 2020/084854 A1 divulgue un procédé selon le préambule de la revendication 1.

Les systèmes d'éclairage actuels comprennent notamment des sources de lumière permettant dorénavant de projeter un faisceau lumineux haute définition. La projection souhaitée de lumière haute définition peut être obtenue par l'intermédiaire des sources de lumière et à partir d'images, ou de motifs d'image, que les sources reçoivent en vue de les afficher et ainsi projeter un faisceau lumineux donné. Ces images ou motifs d'image peuvent atteindre des résolutions très élevées maintenant, notamment en fonction de la résolution de la source de lumière utilisée. A titre d'exemple, la source de lumière peut avoir au moins 4 000 à 30 000 pixels, permettant ainsi de générer un faisceau lumineux à partir d'image de ce niveau de résolution.

Pour parvenir à générer de tels faisceau lumineux haute définition, plusieurs sources lumineuses peuvent être utilisées, voire combinées, ce qui nécessite de les contrôler et de synchroniser finement ces sources afin de fournir des fonctionnalités d'éclairage maîtrisées, variées et adaptatives.

Le véhicule embarque donc de plus en plus de sources lumineuses, qui utilisent des données d'image haute définition de plus en plus lourdes, ce qui implique une grande quantité de données qui doivent être gérées par une unité de contrôle du véhicule et communiquées via un moyen de transmission entre l'unité de contrôle et la ou les sources lumineuses. Pour ce faire par exemple, un bus de données de type protocole CAN est souvent utilisé pour transférer de telles données entre l'unité de contrôle et la source de lumière. Cependant, ces moyens de transmission de données ont pour inconvénient d'avoir une largeur de bande limitée, ne permettant pas par exemple de dépasser un débit de 2 à 5 Mbps généralement. De ce fait, des difficultés apparaissent pour transmettre sur ces réseaux limités la grande quantité de données nécessaire aux images haute définition susmentionnées. De surcroît, ces réseaux servent également à la communication d'autres données véhicule, ce qui implique que la bande passante disponible pour les données d'image haute définition peut encore varier à la baisse, par exemple en étant limité à une plage de 70 à 90% du débit maximal possible sur le réseau de transmission de données.

A titre d'exemple, pour communiquer des données d'image haute définition pour la projection d'une fonction d'éclairage avec une résolution de 20 000 pixels, le débit nécessaire sur un réseau de transmission de type CAN-FD serait généralement de 10 à 12

Mbps. Or, un tel réseau CAN-FD est en réalité limité à 5 Mbps à ce jour (voire même à 2 Mbps dans la plupart des cas). Il existe donc un besoin d'optimiser les données transmises sur ces réseaux, et notamment de compresser les données communiquées afin de transmettre un flux de données d'image haute définition suffisant pour assurer la ou les fonctions d'éclairage associées, et ce tout en respectant les contraintes de débit et bande passante de ce même réseau.

Des méthodes de compression connues ont été envisagées pour palier à cette problématique. Toutefois, elles se sont toutes avérées insuffisamment efficaces par rapport à la spécificité des faisceaux de route, compromettant ainsi une réduction suffisante de la largeur de la bande passante requise par les constructeurs automobiles.

Pour y parvenir, il pourrait être prévu que plusieurs niveaux ou itérations de compression des données soient réalisés, jusqu'à réussir à respecter une largeur de bande souhaitée. Ceci étant, une telle démarche impacte très sensiblement la qualité d'affichage des fonctions d'éclairage projetées, puisque à chaque compression effectuée, la qualité d'affichage est impactée, elle est réduite.

Or, pour certaines fonctions d'éclairage, par exemple Feux de route évolutifs (connu aussi sous l'acronyme ADB pour "Adaptive Driving Beam" en langue anglaise) et marquage au sol (connu aussi sous l'acronyme RW pour "Road Writing" en langue anglaise), la qualité d'affichage ne peut être trop dégradée, sous peine de diminuer sensiblement le confort de l'utilisateur, rendre incertaines, voire inadaptées ou même illisibles des informations lumineuses projetées par le faisceau lumineux.

Une solution est donc recherchée à ces problématiques afin de palier aux inconvénients préalablement cités.

L'invention apporte une solution aux problèmes posés au moyen, selon un premier aspect de l'invention, d'un procédé de gestion de données d'image dans un système d'éclairage de véhicule tel que détaillé en revendication 1.

Selon un deuxième aspect de l'invention, l'invention concerne également un système d'éclairage tel que défini en revendication 13.

Selon un autre mode réalisation avantageux, l'au moins un module d'éclairage comprend au moins une source de lumière à semi-conducteurs, telles que des LED, et en particulier une source LED pixélisée.

Par rapport à l'éclairage à incandescence, l'éclairage à semi-conducteurs crée de la lumière visible avec une production de chaleur et une dissipation d'énergie réduites. La masse généralement faible d'un dispositif d'éclairage électronique à semi-conducteurs offre une plus grande résistance aux chocs et aux vibrations que les tubes/ampoules en verre cassant et les fils de filaments longs et fins. Ils éliminent également l'évaporation du filament, ce qui peut augmenter la durée de vie du dispositif d'éclairage. Certains exemples de ces types d'éclairage comprennent les diodes électroluminescentes (DEL ou LED pour "Light-Emitting Diode" en langue anglaise) à semi-conducteurs, les diodes électroluminescentes organiques (DELO) ou les diodes électroluminescentes à polymère (DELP) comme sources d'éclairage plutôt que les filaments électriques, le plasma ou le gaz. Les fonctions d'éclairage haute définition peuvent être assurées par projection d'un ou plusieurs faisceaux lumineux projetés par une source LED ou un ensemble de LEDs, voire par une source LED pixélisée.

Sauf définition contraire, tous les termes (y compris les termes techniques et scientifiques) utilisés dans le présent document doivent être interprétés conformément aux usages de la profession. Il sera en outre entendu que les termes d'usage courant doivent également être interprétés comme étant d'usage dans l'art concerné et non dans un sens idéalisé ou trop formel, sauf si cela est expressément défini dans le présent document.

Dans ce texte, le terme "comprend" et ses dérivés (tels que "comprenant", etc.) ne doivent pas être compris dans un sens excluant, c'est-à-dire que ces termes ne doivent pas être interprétés comme excluant la possibilité que ce qui est décrit et défini puisse inclure d'autres éléments, étapes, etc.

Pour compléter la description et pour permettre une meilleure compréhension de l'invention, un ensemble de dessins est fourni. Ces dessins font partie intégrante de la description et illustrent un mode de réalisation de l'invention, qui ne doit pas être interprétée comme limitant la portée de l'invention, mais simplement comme un exemple de la manière dont l'invention peut être réalisée. Les dessins comprennent les figures suivantes :
fig.1 montrant un premier mode de réalisation du système d'éclairage selon l'invention.
fig.2 montrant un deuxième mode de réalisation de ce système d'éclairage.
fig.3 montrant un troisième mode de réalisation de ce système d'éclairage.
fig.4A, fig.4B et fig.4C illustrant des exemples de motifs d'éclairage à projeter par le système d'éclairage pour assurer une fonction d'éclairage.
fig.5A, fig.5B et fig.5C illustrant d'autres exemples de motifs d'éclairage à projeter par le système d'éclairage pour assurer d'autres fonctions d'éclairage.
fig.6 illustrant l'exemple de motifs d'éclairage de Fig.5B selon un autre mode de réalisation.
fig.7 montrant une première représentation d'étapes du procédé de gestion de données d'image selon l'invention.
fig.8 montrant une deuxième représentation d'étapes du procédé de gestion de données d'image, comprenant des étapes supplémentaires à la première représentation de la fig.7.
fig.9 le résultat sur le taux de compression obtenu grâce à la sélection de données d'image à compresser lorsque le procédé conforme à l'invention est utilisé.
Fig.10 montrant un dispositif d'éclairage de véhicule qui comprend au moins une partie du système d'éclairage selon l'invention.

Sur ces figures, les références suivantes ont été utilisées :
LB Fonction d'éclairage de feux de croisement
HB Fonction d'éclairage de feux de route
ADB Fonction d'éclairage de feux de route adaptatifs
RW Fonction d'éclairage de marquage au sol
SYS Système d'éclairage
SC Système de commande
PCM Module de pilotage des fonctions d'éclairage
CAN Bus de transmission de données multiplexé
MOD Module d'éclairage
PLED, PLED1, PLED2, PLED3, PLED4 Source de lumière à semi-conducteurs
UC1 Première unité de commande
UC2 Deuxième unité de commande
PROC1 Première unité de processeur
PROC2 Deuxième unité de processeur
MOD1 Premier module d'éclairage
MOD2 Deuxième module d'éclairage
REC Étape de réception d'instruction
DET Étape de détermination
COMP Étape de comparaison
COMPR Étape de compression de données d'image
TRANS Étape de transmission de données d'image compressées
COMPR Étape de décompression des données d'image compressées
DEB Étape de comparaison du débit requis pour transmettre des données d'image
ME Motif d'éclairage
X Rangées sélectionnées
L Rangées des motifs d'éclairage
P1 Première partie des L rangées
P2 Deuxième partie des L rangées
DIS Dispositif d'éclairage de véhicule de véhicule
OPT Optique d'éclairage

Les exemples de réalisations sont décrits de manière suffisamment détaillée pour permettre à ceux qui ont des compétences ordinaires dans cette technique de réaliser et de mettre en œuvre les systèmes et les procédés décrits ici. Il est important de comprendre que les modes de réalisation peuvent être effectués sous de nombreuses formes alternatives et ne doivent pas être interprétés comme étant limités aux exemples présentés ici.

En conséquence, bien que les modes de réalisation puissent être modifiés de diverses manières et prendre diverses formes alternatives, des réalisations spécifiques de celle-ci sont montrées dans les dessins et décrites en détail ci-dessous à titre d'exemple. Il n'y a aucune intention de se limiter aux exemples particuliers divulgués. Au contraire, toutes les modifications, équivalents et alternatives entrant dans le champ d'application des revendications annexées doivent être inclus.

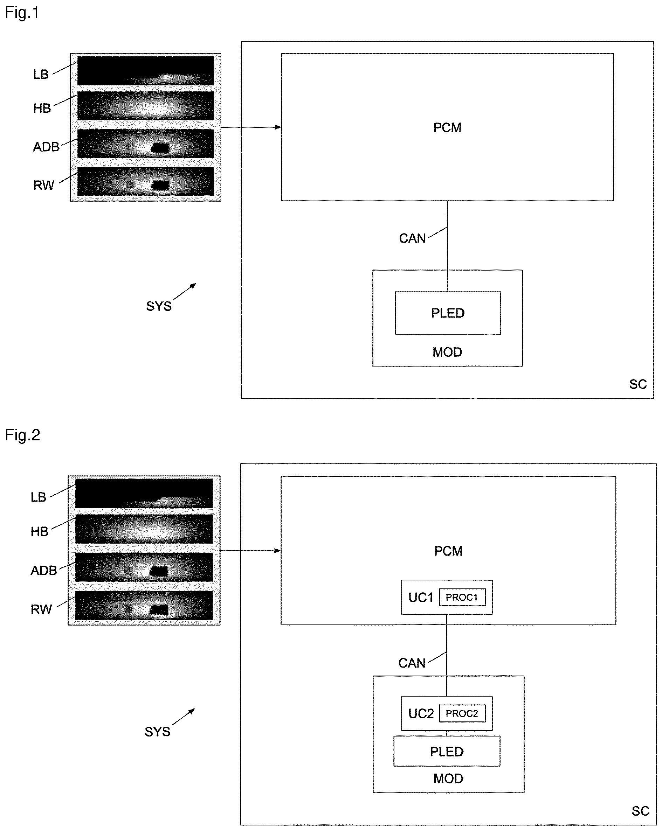

On se réfère tout d'abord à la fig.1 qui montre un premier mode de réalisation du système d'éclairage SYS selon l'invention. Le système d'éclairage SYS comprend notamment :
- au moins un module d'éclairage MOD apte à projeter des fonctions d'éclairage à partir de données d'image compressées,
- un bus multiplexé CAN pour la transmission de données d'image compressées au module d'éclairage MOD, et
- un système de commande SC configuré pour mettre en oeuvre le procédé de gestion de données d'image proposé, en vue de générer des fonctions d'éclairage données.

A cet effet, le système de commande SC peut recevoir des instructions d'une unité de commande du véhicule (non représentée sur les figures), pour générer chacune des fonctions d'éclairage indépendamment les unes des autres, ou au contraire, en combinaison. Par exemple, les fonctions d'éclairage peuvent être combinées entre elles deux à deux. Selon un autre exemple, trois ou quatre fonctions d'éclairage peuvent être combinées entre elles, voire même l'ensemble des fonctions d'éclairage possibles.

L'unité de commande du véhicule peut générer les instructions de génération de fonctions d'éclairage à partir d'une commande d'éclairage effectuée par le conducteur, ou d'une commande d'éclairage déterminée par une unité de détection, telle qu'une caméra ou un détecteur de luminosité.

Les instructions reçues par le système de commande SC peuvent notamment être des instructions pour générer un faisceau lumineux correspondant aux fonctions d'éclairage suivantes :
- Feux de croisement LB (connu aussi sous l'acronyme LB pour "Low Beam" en langue anglaise),
- Feux de route HB (connu aussi sous l'acronyme HB pour "High Beam" en langue anglaise),
- Feux de route évolutifs ADB (connu aussi sous l'acronyme ADB pour "Adaptive Driving Beam" en langue anglaise), ou
- marquage au sol RW (connu aussi sous l'acronyme RW pour "Road Writing" en langue anglaise).

Il est entendu par Feux de route évolutifs ADB toutes fonctions d'éclairage permettant de faire varier dynamiquement le faisceau d'éclairage pour l'adapter à des situations de circulation du véhicule. Par exemple, cela peut concerner une fonction selon laquelle l'éclairage est projeté avec une photométrie de type feu de route tout en évitant l'éblouissement des autres usagers de la route. En variante ou en complément, la fonction peut concerner :
- une photométrie permettant un éclairage dynamique directionnel, autrement dit un déplacement horizontal de l'intensité maximale d'une photométrie LB ou HB en fonction de l'angle de rotation du volant d'un véhicule automobile (aussi connue sous l'acronyme DBL, pour "Dynamic Bending Light" langue anglaise) ;
- un éclairage permettant d'éviter l'éblouissement des panneaux d'affichage d'une route suite à la projection de faisceaux lumineux provenant du véhicule automobile (aussi connue sous l'acronyme TSAG pour "Traffic Sign Anti-Glare" en langue anglaise) ;
- un éclairage permettant la projection de de motif de type lignes sur la route, notamment pour délimiter une portion de route à emprunter par le véhicule automobile ou présenter une stratégie d'évitement d'obstacle (aussi connue sous l'acronyme LA pour "Line Assist" en langue anglaise).

Il est entendu par marquage au sol RW toutes fonctions d'éclairage permettant la projection sur la route de motifs visibles par le conducteur et/ou par les usagers de la route, notamment d'aides à la conduites, de sigles de signalisation ou autre indicateurs de navigation par exemple.

Le système de commande SC peut comprendre en outre un module de pilotage PCM de sources lumineuses du véhicule, apte à recevoir les instructions de génération de fonctions d'éclairage et à contrôler les sources lumineuses du véhicule de sorte à générer le faisceau lumineux attendu pour la fonction d'éclairage demandée. Pour ce faire, le module de pilotage PCM peut notamment être en interface avec le bus multiplexé CAN pour transmettre les données d'image nécessaires au module d'éclairage MOD afin de projeter les fonctions d'éclairage souhaitées.

Le bus multiplexé est un bus de données de type protocole CAN ou CAN-FD.

Pour générer des faisceaux lumineux associés à des fonctions d'éclairage à déclencher, le module d'éclairage MOD comprend au moins une source de lumière, et en particulier une source de lumière à semi-conducteurs PLED, telles que des LED, et en particulier une source LED pixélisée.

De cette manière, le système d'éclairage SYS est apte à faire projeter des faisceaux lumineux par la source de lumière PLED à partir de données d'image compressées reçues via le bus multiplexé CAN. En outre, le système d'éclairage SYS vise à compresser les données d'image par l'intermédiaire du système de commande SC, par exemple au niveau du module de pilotage PCM, selon les fonctions d'éclairage souhaitées et de la mise en oeuvre du procédé de gestion de données d'image proposé.

On se réfère maintenant à la Fig.2 qui montre un deuxième mode de réalisation du système d'éclairage SYS, dans lequel le système de commande SC comprend en outre :
- une première unité de commande UC1 (par exemple intégrée au module de pilotage PCM) munie d'une unité de processeur PROC1 configurée pour :
   - compresser des données d'image de fonctions d'éclairage LB, HB,ADB,RW,
   - transmettre au module d'éclairage MOD, via le bus multiplexé CAN, les données d'image compressées,
- une deuxième unité de commande UC2 (par exemple intégrée au module d'éclairage MOD) munie d'une unité de processeur PROC2 configurée pour :
   - recevoir des données d'image compressées transmises via ledit bus multiplexé CAN,
   - décompresser les données d'image reçues,
   - générer l'au moins une fonction d'éclairage HB,ADB,RW à partir des données d'image reçues et décompressées.

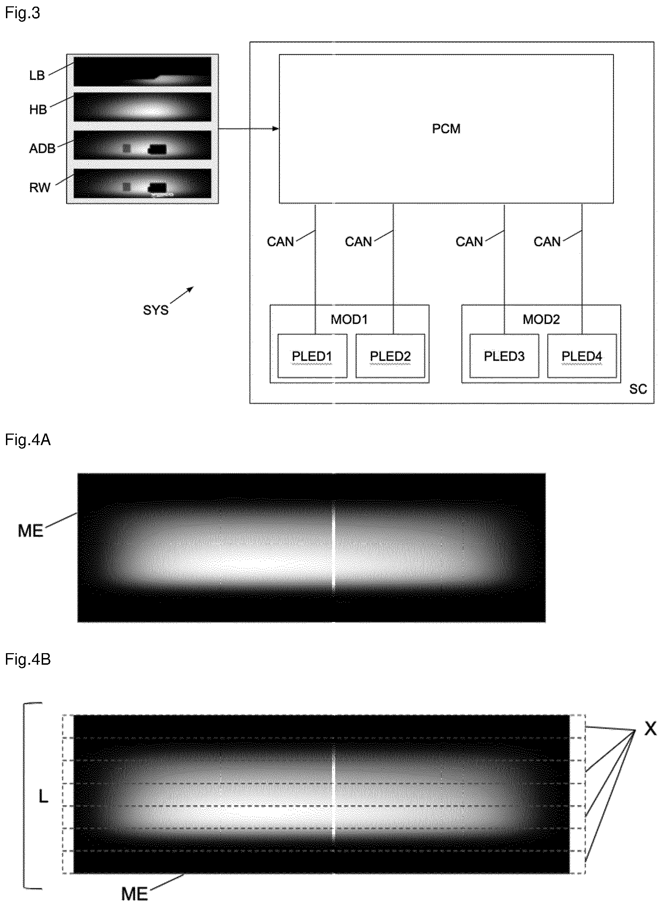

On se réfère maintenant à la Fig.3 qui montre un troisième mode de réalisation du système d'éclairage SYS dans lequel le système de commande SC comporte un premier module MOD1 et un deuxième module MOD2 d'éclairage, qui peuvent être configurés pour être :
- intégrés chacun dans un projecteur différent du véhicule, par exemple le premier module MOD1 dans le projecteur droit du véhicule et le deuxième module MOD2 dans le projecteur gauche du véhicule ;
- intégrés dans un même projecteur de véhicule.

En outre, chaque module MOD1 et MOD2 peut comprendre une pluralité de sources lumineuses PLED1, PLED2, PLED3, PLED4 pour permettre de générer les faisceaux lumineux des fonctions d'éclairage souhaitées LB, HB, ADB, RW. Les sources lumineuses PLED1, PLED2, PLED3, PLED4 peuvent en particulier être des sources de lumière à semi-conducteurs PLED, telles que des LED, et en particulier des sources LED pixélisées, par exemple ayant une résolution de 2 500, 4 000 ou 20 000 pixels.

Pour la compression des données d'image, le taux de compression souhaité est de préférence supérieur ou égal à 75%, voire de préférence encore supérieur ou égal à 85%. En effet, une compression d'au moins 75% est un taux de compression qui permet de faire passer des données d'image d'une fonction d'éclairage haute définition, ou d'une combinaison de fonctions d'éclairage haute définition, sur des bus de transmission de véhicule de véhicule à bande passante limitée, tel que le bus multiplexé CAN.

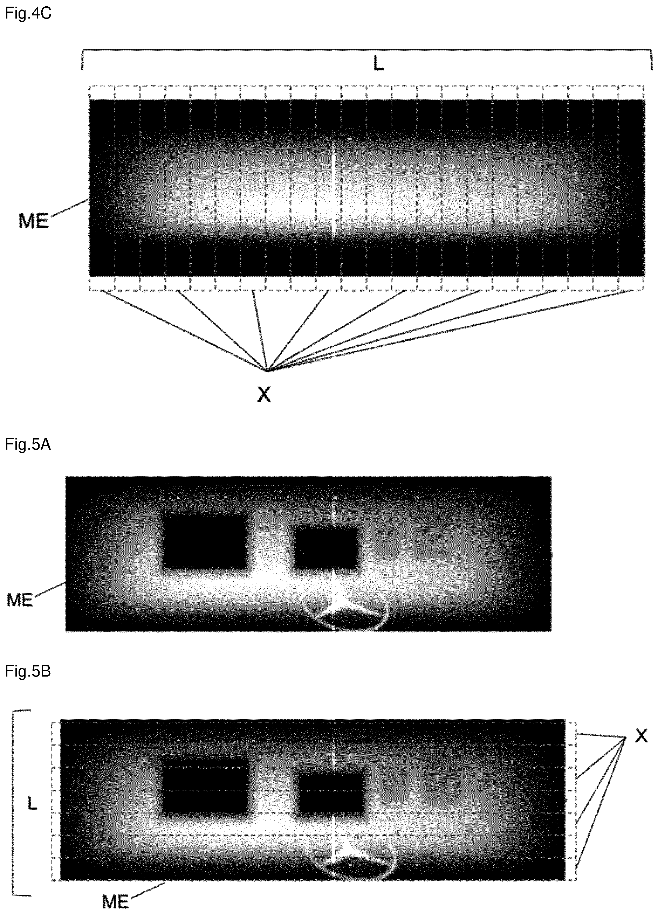

On se réfère maintenant à Fig.4A, Fig.4B et Fig.4C qui illustrent des exemples de motifs d'éclairage ME à projeter par le système d'éclairage SYS pour assurer une fonction d'éclairage, ici de type Feux de route, HB.

Le motif d'éclairage ME illustré est divisé en L rangées, L étant un nombre entier.

Selon un mode de réalisation illustré à Fig.4B, chaque rangée des L rangées comporte au moins une ligne de pixels du motif d'éclairage. Selon un mode de réalisation possible chaque rangée correspond à une seule ligne de pixels du motif. Selon une variante possible, chaque rangée correspond à un groupe de lignes de pixels du motif. Les L rangées peuvent par exemple alors correspondre à des groupes de 2 à 10 lignes de pixels par exemple.

Selon un mode de réalisation illustré à Fig.4C, chaque rangée des L rangées comporte au moins une colonne de pixels du motif d'éclairage. Selon un mode de réalisation possible chaque rangée correspond à une seule colonne de pixels du motif. Selon une variante possible, chaque rangée correspond à un groupe de colonnes de pixels du motif.

Parmi les L rangées du motif d'éclairage ME, le procédé de gestion de données d'image permet de sélectionner seulement une partie des L rangées pour la compression de données d'image, en l'occurrence X rangées parmi les L rangées, X étant un nombre entier inférieur à L.

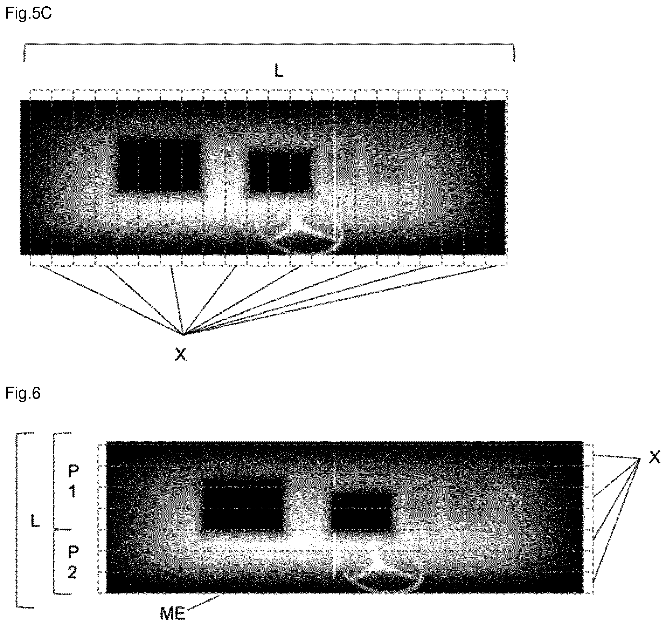

Selon un autre exemple possible de projection de fonctions d'éclairage, les Fig.5A, Fig.5B et Fig.5C illustrent les X rangées choisies parmi les L rangées de motifs d'éclairage ME, pour assurer la projection de la combinaison de fonctions d'éclairage de type Feux de route évolutifs, ADB et marquage au sol RW.

On se réfère maintenant à la Fig.6 qui illustre un mode de réalisation dans lequel une première partie P1 des L rangées de motif d'éclairage ME est prévue pour la projection d'une première fonction d'éclairage (comme la fonction ADB) et une deuxième partie P2 des L rangées est prévue pour la projection d'une deuxième fonction d'éclairage (comme la fonction RW). La sélection de X rangées de données d'image à compresser peut se faire parmi seulement l'une ou l'autre de ces première P1 et deuxième P2 parties de L rangées ou, alternativement, parmi les deux parties P1 et P2.

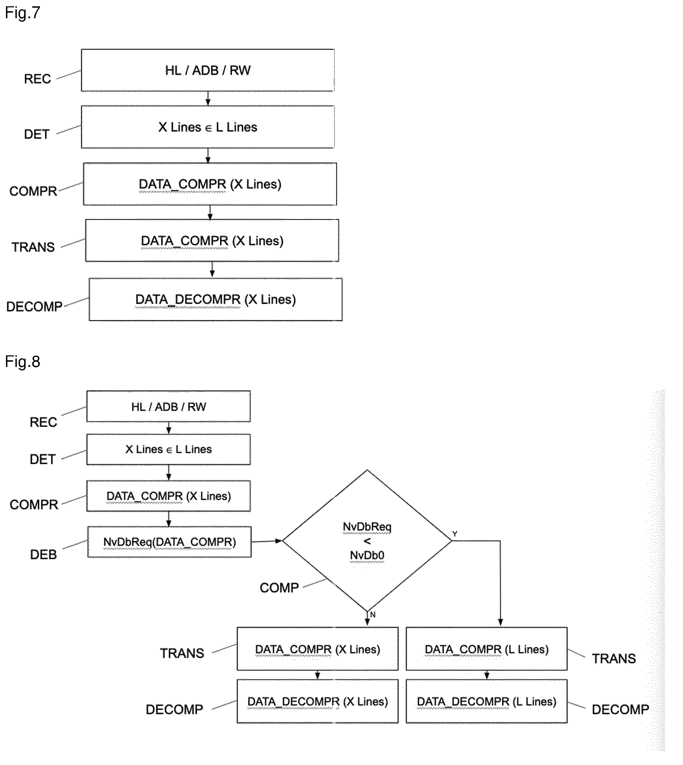

On se réfère maintenant à Fig.7 qui montre une représentation des étapes du procédé de gestion de données d'image selon l'invention. Le procédé comprend notamment les étapes suivantes :
- réception (étape REC) d'une instruction de déclenchement d'au moins une fonction d'éclairage HB,ADB,RW, la fonction d'éclairage étant configurée pour être générée par le module d'éclairage MOD à partir de données d'image compressées correspondant aux motifs d'éclairage ME comportant L rangées, L étant un nombre entier,
- détermination (étape DET) des données d'image à compresser parmi les données d'image des motifs d'éclairage ME de la fonction d'éclairage HB,ADB,RW en sélectionnant les données d'image de X rangées parmi les L rangées des motifs d'éclairage, X étant un nombre entier inférieur à L,
- compression (étape COMPR) des données d'image déterminées comme étant à compresser,
- transmission (étape TRANS) au module d'éclairage MOD, via le bus multiplexé CAN, des données d'image compressées pour génération et projection de la fonction d'éclairage HB,ADB,RW.

Ainsi, la quantité de données à compresser et à transmettre est diminuée, grâce à la sélection des X rangées parmi les L rangées.

En particulier, à l'étape de détermination DET, les X rangées sélectionnées peuvent être choisies selon une récurrence donnée parmi les L rangées. Cette récurrence donnée peut être définie toutes les N rangées, N étant un nombre entier inférieur à L, et X étant égal à L divisé par N.

Comme illustré à la Fig.4B ou Fig.5B, la récurrence choisie peut être égale à N=2, ce qui signifie que seulement une rangée de données sur deux parmi les L rangées vont être choisies pour compression. Ce mode de réalisation permet de générer des fonctions d'éclairage avec une faible perte de qualité des motifs d'éclairage projetés (comparé à la qualité initiale des motifs d'éclairage avant compression).

Comme illustré à la Fig.4C ou à la Fig.5C, la récurrence choisie peut être égale à N=3, ce qui signifie que seulement une rangée de données sur trois parmi les L rangées vont être choisies pour compression. Ce mode de réalisation permet de compresser encore davantage les données d'image des motifs, et ce tout en conservant un niveau de qualité des motifs d'éclairage générés encore suffisant pour certaines fonctions d'éclairage haute définition, par exemple Feux de route évolutifs, et des fonctions d'éclairage standard telles que Feux de croisement ou Feux de route.

N peut aussi être choisi supérieur ou égal à 4. Dans ce mode de réalisation, le niveau de compression augmente encore. Une telle réalisation peut permettre en l'occurrence de répondre à un besoin ponctuel de bande passante importante sur le bus multiplexé, quitte à dégrader la qualité d'affichage de certaines fonctions d'éclairage non critique telles que Feux de croisement ou Feux de route.

Le procédé comprend en outre une étape de décompression (étape DECOMP), dans laquelle les motifs d'éclairage à projeter sont reconstruits à partir des données d'image compressées transmises à l'étape TRANS. Cette étape de décompression vise à utiliser les données d'image compressées transmises pour reconstruire les données d'image des rangées qui n'ont pas été sélectionnées parmi les L rangées de motifs d'éclairage au moment des étapes de détermination et compression.

Cette reconstruction peut être effectuée selon différentes techniques, notamment interpolation ou linéarisation des valeurs de données d'image entre les données d'image de X rangées transmises. D'autres techniques peuvent être envisagés pour reconstruire les données d'image qui n'ont pas été retenus ni transmises suite à l'étape de sélection, comme par exemple :
- interpolation linéaire des sous-intervalles entre les données d'image de X rangées transmises,
- interpolation polynomiale entre les données d'image de X rangées transmises,
- interpolation par la méthode de Bézier des sous-intervalles entre les données d'image de X rangées transmises,
- interpolation par la méthode des adaptations paramétriques des sous-intervalles entre les données d'image de X rangées transmises,
- interpolation par la méthode des moindre carré des sous-intervalles entre les données d'image de X rangées transmises,
- interpolation par la méthode de la modélisation exponentielle des sous-intervalles entre les données d'image de X rangées transmises,
- interpolation par la méthode des séries de Fourier des sous-intervalles entre les données d'image de X rangées transmises,
- interpolation par la méthode de la modélisation par Gaussian des sous-intervalles entre les données d'image de X rangées transmises,
- interpolation par la méthode des séries de puissances des sous-intervalles entre les données d'image de X rangées transmises,
- interpolation par la méthode des sommes des modélisations de sinus des sous-intervalles entre les données d'image de X rangées transmises,
- interpolation par la méthode de distribution de Weibull des sous-intervalles entre les données d'image de X rangées transmises,
- interpolation par la méthode des modèles personnalisés des sous-intervalles entre les données d'image de X rangées transmises.

On se réfère maintenant à la Fig.8 montrant une deuxième représentation d'étapes du procédé de gestion de données d'image, comprenant des étapes supplémentaires à la première représentation de la Fig.7.

Dans ce mode de réalisation, le procédé comprend en outre les étapes suivantes :
- détermination (étape DEB), pour la génération de la fonction d'éclairage HB,ADB,RW, d'un niveau de débit requis NvDbReq pour transmettre sur le bus multiplexé CAN les données d'image compressées de l'ensemble des L rangées,
- comparaison (étape COMP) du niveau de débit NvDbReq déterminé avec une valeur seuil de débit NvDb0 du bus multiplexé CAN,
- dans lequel les étapes de détermination, compression et transmission des données d'image des X rangées sont réalisées lorsque ledit niveau de débit NvDbReq déterminé est supérieur à ladite valeur seuil de débit NvDb0,
- et dans lequel les données d'image de l'ensemble des L rangées sont compressées et transmises audit au moins un module d'éclairage MOD via le bus multiplexé CAN, lorsque ledit niveau de débit NvDbReq déterminé est inférieur ou égal à ladite valeur seuil de débit NvDb0.

Dans cet exemple, les étapes de détermination et compression des données d'image des X rangées de motifs d'éclairage sont réalisées qu'en cas de débit insuffisant sur le bus multiplexé pour passer l'ensemble des données d'image compressées sur le bus multiplexé (niveau de débit déterminé plus élevé que la valeur seuil de débit). Sinon, les données d'image de l'ensemble des L rangées sont transmises lorsque le débit disponible sur le bus multiplexé le permet (niveau de débit déterminé inférieur ou égal à valeur seuil de débit). Ainsi, il est possible de rendre dynamique la compression des données d'image en fonction du débit disponible sur le bus multiplexé.

En outre, conformément à l'exemple de réalisation de la Fig.6, l'étape de réception d'instruction, la première fonction d'éclairage ADB peut être configurée pour être appliquée sur la première partie P1 des L rangées des motifs d'éclairage, et la deuxième fonction d'éclairage RW est configurée pour être appliquée sur une deuxième partie P2 des L rangées des motifs d'éclairage, distincte de la première partie P1. Les étapes de détermination, compression et transmission des données d'image des X rangées sont réalisées au sein de la première partie P1 des L rangées des motifs d'éclairage, et dans lequel les données d'image associées à la deuxième partie P2 des L rangées des motifs d'éclairage sont, dans leur ensemble, compressées et transmises audit au moins un module d'éclairage MOD via ledit bus multiplexé CAN.

Dans ce mode de réalisation, les étapes de détermination et compression visant à sélectionner et compresser une partie seulement des données d'image des motifs d'éclairage à projeter, ne sont réalisées que pour une portion des motifs. Cela permet notamment de :
- cibler des portions de motifs dans lesquels les fonctions d'éclairage associées peuvent effectivement avoir seulement X rangées de compressées, comme par exemple les fonctions Feux de croisement, Feux de route et Feux de route évolutif,
- distinguer cette portion d'une autre portion de motifs pour laquelle les fonctions d'éclairage associées ne peuvent pas se permettre de perdre en qualité d'affichage, comme par exemple des fonctions de marquage au sol.

Selon un mode de réalisation non illustré, suite à l'étape de compression des données d'image, le procédé comprend en outre des étapes de :
- détermination, pour la génération de l'au moins une fonction d'éclairage du niveau de débit requis pour transmettre les données d'image compressées sur ledit bus multiplexé CAN,
- comparaison du niveau de débit déterminé avec la valeur seuil de débit du bus multiplexé CAN,
- transmission audit au moins un module d'éclairage MOD, via le bus multiplexé CAN, des :
   - données d'image compressées lorsque le niveau de débit déterminé est inférieur ou égal à ladite valeur seuil de débit, et des
   - données d'image de la dernière image transmise via ledit bus multiplexé CAN lorsque le niveau de débit déterminé est supérieur à ladite valeur seuil de débit.

Dans ce mode de réalisation, en cas de débit insuffisant sur le bus multiplexé pour passer les données d'image compressées, il est prévu de continuer à diffuser les données d'image de la dernière image affichée afin d'assurer que la source de lumière maintiendra une fonction d'éclairage, et ce pour la sécurité du conducteur et des autres usagers de la route.

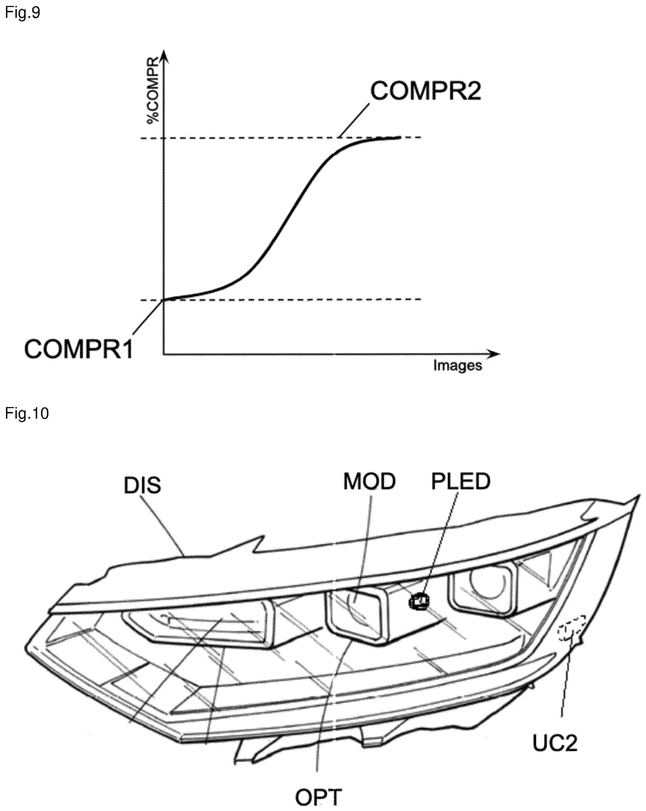

On se réfère maintenant à la Fig.9 qui montre le résultat sur le taux de compression obtenu lorsque le procédé conforme à l'invention est utilisé. En sélectionnant X rangées parmi les L rangées, la quantité de données d'image à compresser est réduit. De ce fait, le taux de compression COMPR1 requis pour la compression de la fonction d'éclairage peut être amélioré, et passer d'une valeur initiale COMPR1 à une valeur de taux de compression améliorée COMPR2, ayant une valeur plus élevée que COMPR1.

Grâce au procédé, il est alors possible de :
- diminuer le nombre de données d'image à communiquer via le bus multiplexé,
- augmenter le niveau de compression des données d'image tout en respectant la largeur de bande maximale autorisée par le bus multiplexé,
- conserver une bonne qualité d'image, sans avoir par exemple à la dégrader significativement par l'intermédiaire d'une nouvelle compression des données d'image déjà compressées, pour réussir à respecter le débit maximal du bus multiplexé,
- assurer la transmission de données d'image haute définition sur le bus multiplexé à partir desquelles il est possible de reconstruire des motifs d'éclairage complet lors d'une étape de décompression.

On se réfère maintenant à la Fig.10 qui montre un dispositif d'éclairage DIS de véhicule de type projecteur avant, ce dispositif d'éclairage DIS comprenant :
- le module d'éclairage MOD comprenant au moins une source de lumière PLED ;
- une optique OPT associée à la source de lumière PLED pour générer des faisceaux lumineux de fonctions d'éclairage souhaitées ;
- l'unité de commande UC2 pour effectuer les étapes de réception et décompression des données d'image compressées.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes.

Par exemple, l'invention pourrait s'appliquer également pour un système d'éclairage comprenant au moins un feu arrière de véhicule et/ou un feux de signalisation de véhicule et/ou un module d'éclairage intérieur de véhicule, en vue de faire générer les fonctions d'éclairage qui leur sont associées tout en bénéficiant des avantages proposés et obtenus par l'invention, par la technique de compression de données d'image selon une fréquence d'affichage dynamique.

## Revendications

1. Procédé de gestion de données d'image dans un système d'éclairage automobile (SYS), le système d'éclairage comprenant :
- au moins un module d'éclairage (MOD) apte à projeter des fonctions d'éclairage à partir de données d'image compressées, et
- un bus multiplexé de type protocole CAN ou CAN-FD (CAN) pour la transmission de données d'image compressées audit au moins un module d'éclairage (MOD),
le procédé comprenant les étapes suivantes :
- réception d'une instruction de déclenchement d'au moins une fonction d'éclairage (HB,ADB,RW), ladite au moins une fonction d'éclairage (HB,ADB,RW) étant configurée pour être générée par ledit au moins un module d'éclairage (MOD) à partir de données d'image compressées correspondant à des motifs d'éclairage comportant L rangées, L étant un nombre entier,
- détermination des données d'image à compresser parmi les données d'image des motifs d'éclairage de l'au moins une fonction d'éclairage (HB,ADB,RW) en sélectionnant les données d'image de X rangées parmi les L rangées des motifs d'éclairage, X étant un nombre entier inférieur à L,
- compression des données d'image déterminées comme étant à compresser,
- transmission audit au moins un module d'éclairage (MOD), via ledit bus multiplexé (CAN), des données d'image compressées pour génération et projection de l'au moins une fonction d'éclairage (HB,ADB,RW)
la méthode étant **caractérisée en ce qu'**elle comprend en outre les étapes suivantes
- détermination, pour la génération de l'au moins une fonction d'éclairage (HB,ADB,RW), d'un niveau de débit requis (NvDbReq) pour transmettre sur ledit bus multiplexé (CAN) les données d'image compressées de l'ensemble des L rangées,
- comparaison du niveau de débit (NvDbReq) déterminé avec une valeur seuil de débit (NvDbO) du bus multiplexé (CAN),
dans lequel les étapes de détermination, compression et transmission des données d'image des X rangées sont réalisées lorsque ledit niveau de débit (NvDbReq) déterminé est supérieur à ladite valeur seuil de débit (NvDbO),
et dans lequel les données d'image de l'ensemble des L rangées sont compressées et transmises audit au moins un module d'éclairage (MOD) via ledit bus multiplexé (CAN),
lorsque ledit niveau de débit (NvDbReq) déterminé est inférieur ou égal à ladite valeur seuil de débit (NvDbO)..

2. Procédé selon la revendication précédente, dans lequel à l'étape de détermination, les X rangées sélectionnées sont choisies selon une récurrence donnée parmi les L rangées, toutes les N rangées, N étant un nombre entier inférieur à L, et X étant égal à L divisé par N.

3. Procédé selon la revendication précédente, dans lequel N est égal à 2.

4. Procédé selon la revendication 2, dans lequel N est égal à 3.

5. Procédé selon la revendication 2, dans lequel N est supérieur ou égal à 4.

6. Procédé selon l'une quelconque des revendications précédentes, comprenant en outre une étape de décompression des données d'image compressées, dans laquelle les motifs d'éclairage à projeter sont reconstruits à partir des données d'image compressées transmises.

7. Procédé selon la revendication précédente, dans lequel l'étape de décompression est basée sur une reconstruction de motifs d'éclairage par linéarisation entre les données d'image des X rangées transmises.

8. Procédé selon la revendication 6 ou 7, dans lequel l'étape de décompression est basée sur une reconstruction de motifs d'éclairage par interpolation entre les données d'image de X rangées transmises.

9. Procédé selon l'une quelconque des revendications précédentes, dans lequel les L rangées correspondent aux lignes horizontales des motifs d'éclairage, chaque rangée des L rangées comportant au moins une ligne de pixels de motifs d'éclairage.

10. Procédé selon l'une quelconque des revendications 1 à 8, dans lequel les L rangées correspondent aux colonnes verticales des motifs d'éclairage, chaque rangée des L rangées comportant au moins une colonne de pixels de motifs d'éclairage.

11. Procédé selon l'une quelconque des revendications précédentes, dans lequel à l'étape de réception d'instruction, au moins une première fonction d'éclairage (ADB) et une deuxième fonction d'éclairage (RW) sont à déclencher,
la première fonction d'éclairage (ADB) étant configurée pour être appliquée sur une première partie (P1) des L rangées des motifs d'éclairage, et
la deuxième fonction d'éclairage (RW) étant configurée pour être appliquée sur une deuxième partie (P2) des L rangées des motifs d'éclairage, distincte de la première partie (P1),
dans lequel les étapes de détermination, compression et transmission des données d'image des X rangées sont réalisées au sein de la première partie (P1) des L rangées des motifs d'éclairage,
et dans lequel les données d'image associées à la deuxième partie (P2) des L rangées des motifs d'éclairage sont, dans leur ensemble, compressées et transmises audit au moins un module d'éclairage (MOD) via ledit bus multiplexé (CAN).

12. Procédé selon l'une des revendications précédentes, dans lequel suite à l'étape de compression des données d'image, le procédé comprend en outre des étapes de :
- détermination, pour la génération de l'au moins une fonction d'éclairage (HB,ADB,RW) du niveau de débit requis (NvDbReq) pour transmettre les données d'image compressées sur ledit bus multiplexé (CAN),
- comparaison du niveau de débit (NvDbReq) déterminé avec la valeur seuil de débit (NvDbO) du bus multiplexé (CAN),
- transmission audit au moins un module d'éclairage (MOD), via ledit bus multiplexé (CAN), des :
• données d'image compressées lorsque le niveau de débit (NvDbReq) déterminé est inférieur ou égal à ladite valeur seuil de débit (NvDbO), et des
• données d'image de la dernière image transmise via ledit bus multiplexé (CAN) lorsque le niveau de débit (NvDbReq) déterminé est supérieur à ladite valeur seuil de débit (NvDbO).

13. Système d'éclairage automobile (SYS) comprenant :
- au moins un module d'éclairage (MOD) apte à projeter des fonctions d'éclairage à partir de données d'image compressées,
- un bus multiplexé (CAN) pour la transmission de données d'image compressées audit au moins un module d'éclairage (MOD), et
- un système de commande (SC) configuré pour mettre en oeuvre le procédé de gestion de données d'image selon l'une quelconque des revendications précédentes.

14. Système d'éclairage automobile (SYS) selon la revendication précédente, dans lequel l'au moins un module d'éclairage (MOD) comprend au moins une source de lumière à semi- conducteurs (PLED), telles que des LED, et en particulier une source LED pixélisée.

## Patentansprüche

1. Verfahren zur Verwaltung von Bilddaten in einem Fahrzeugbeleuchtungssystem (SYS), wobei das Beleuchtungssystem umfasst:
- mindestens ein Beleuchtungsmodul (MOD), das geeignet ist, Beleuchtungsfunktionen aus komprimierten Bilddaten zu projizieren, und
- einen Multiplex-Bus vom Typ CAN- oder CAN-FD-Protokoll (CAN) zur Übertragung komprimierter Bilddaten an das mindestens eine Beleuchtungsmodul (MOD),
wobei das Verfahren die folgenden Schritte umfasst:
- Empfangen einer Anweisung zum Auslösen mindestens einer Beleuchtungsfunktion (HB, ADB, RW), wobei die mindestens eine Beleuchtungsfunktion (HB, ADB, RW) konfiguriert ist, um durch das mindestens eine Beleuchtungsmodul (MOD) aus komprimierten Bilddaten erzeugt zu werden, die Beleuchtungsmustern mit L Reihen entsprechen, wobei L eine ganze Zahl ist,
- Bestimmung der zu komprimierenden Bilddaten aus den Bilddaten der Beleuchtungsmuster der mindestens einen Beleuchtungsfunktion (HB, ADB, RW) durch Auswahl der Bilddaten von X Reihen aus den L Reihen der Beleuchtungsmuster, wobei X eine ganze Zahl kleiner als L ist,
- Komprimierung der als zu komprimierend bestimmten Bilddaten,
- Übertragung der komprimierten Bilddaten an das mindestens eine Beleuchtungsmodul (MOD) über den Multiplex-Bus (CAN) zur Erzeugung und Projektion der mindestens einen Beleuchtungsfunktion (HB, ADB, RW),
wobei das Verfahren **dadurch gekennzeichnet ist, dass** es ferner die folgenden Schritte umfasst:
- Bestimmung, für die Erzeugung der mindestens einen Beleuchtungsfunktion (HB, ADB, RW), eines erforderlichen Durchsatzniveaus (NvDbReq) zur Übertragung der komprimierten Bilddaten aller L Reihen über den Multiplex-Bus (CAN),
- Vergleich des bestimmten Durchsatzniveaus (NvDbReq) mit einem Durchsatzschwellenwert (NvDb0) des Multiplex-Busses (CAN),
wobei die Schritte der Bestimmung, Komprimierung und Übertragung der Bilddaten der X Reihen durchgeführt werden, wenn das bestimmte Durchsatzniveau (NvDbReq) größer als der Durchsatzschwellenwert (NvDb0) ist,
und wobei die Bilddaten aller L Reihen komprimiert und an das mindestens eine Beleuchtungsmodul (MOD) über den Multiplex-Bus (CAN) übertragen werden, wenn das bestimmte Durchsatzniveau (NvDbReq) kleiner oder gleich dem Durchsatzschwellenwert (NvDbO) ist.

2. Verfahren nach dem vorhergehenden Anspruch, wobei im Bestimmungsschritt die X ausgewählten Reihen nach einer gegebenen Wiederkehr unter den L Reihen ausgewählt werden, alle N Reihen, wobei N eine ganze Zahl kleiner als L ist und X gleich L geteilt durch N ist.

3. Verfahren nach dem vorhergehenden Anspruch, wobei N gleich 2 ist.

4. Verfahren nach Anspruch 2, wobei N gleich 3 ist.

5. Verfahren nach Anspruch 2, wobei N größer oder gleich 4 ist.

6. Verfahren nach einem der vorhergehenden Ansprüche, das ferner einen Schritt der Dekomprimierung der komprimierten Bilddaten umfasst, wobei die zu projizierenden Beleuchtungsmuster aus den übertragenen komprimierten Bilddaten rekonstruiert werden.

7. Verfahren nach dem vorhergehenden Anspruch, wobei der Dekomprimierungsschritt auf einer Rekonstruktion von Beleuchtungsmustern durch Linearisierung zwischen den Bilddaten der übertragenen X Reihen basiert.

8. Verfahren nach Anspruch 6 oder 7, wobei der Dekomprimierungsschritt auf einer Rekonstruktion von Beleuchtungsmustern durch Interpolation zwischen den Bilddaten der übertragenen X Reihen basiert.

9. Verfahren nach einem der vorhergehenden Ansprüche, wobei die L Reihen den horizontalen Linien der Beleuchtungsmuster entsprechen, wobei jede Reihe der L Reihen mindestens eine Pixelzeile der Beleuchtungsmuster umfasst.

10. Verfahren nach einem der Ansprüche 1 bis 8, wobei die L Reihen den vertikalen Spalten der Beleuchtungsmuster entsprechen, wobei jede Reihe der L Reihen mindestens eine Pixelspalte der Beleuchtungsmuster umfasst.

11. Verfahren nach einem der vorhergehenden Ansprüche, wobei im Schritt des Empfangens der Anweisung mindestens eine erste Beleuchtungsfunktion (ADB) und eine zweite Beleuchtungsfunktion (RW) auszulösen sind, wobei die erste Beleuchtungsfunktion (ADB) konfiguriert ist, um auf einen ersten Teil (P1) der L Reihen der Beleuchtungsmuster angewendet zu werden, und die zweite Beleuchtungsfunktion (RW) konfiguriert ist, um auf einen zweiten Teil (P2) der L Reihen der Beleuchtungsmuster angewendet zu werden, der sich vom ersten Teil (P1) unterscheidet, wobei die Schritte der Bestimmung, Komprimierung und Übertragung der Bilddaten der X Reihen innerhalb des ersten Teils (P1) der L Reihen der Beleuchtungsmuster durchgeführt werden, und wobei die mit dem zweiten Teil (P2) der L Reihen der Beleuchtungsmuster verbundenen Bilddaten in ihrer Gesamtheit komprimiert und an das mindestens eine Beleuchtungsmodul (MOD) über den Multiplex-Bus (CAN) übertragen werden.

12. Verfahren nach einem der vorhergehenden Ansprüche, wobei nach dem Schritt der Komprimierung der Bilddaten das Verfahren ferner die Schritte umfasst:
- Bestimmung, für die Erzeugung der mindestens einen Beleuchtungsfunktion (HB, ADB, RW), des erforderlichen Durchsatzniveaus (NvDbReq) zur Übertragung der komprimierten Bilddaten über den Multiplex-Bus (CAN),
- Vergleich des bestimmten Durchsatzniveaus (NvDbReq) mit dem Durchsatzschwellenwert (NvDbO) des Multiplex-Busses (CAN),
- Übertragung an das mindestens eine Beleuchtungsmodul (MOD) über den Multiplex-Bus (CAN) von:
- komprimierten Bilddaten, wenn das bestimmte Durchsatzniveau (NvDbReq) kleiner oder gleich dem Durchsatzschwellenwert (NvDbO) ist, und
- Bilddaten des letzten über den Multiplex-Bus (CAN) übertragenen Bildes, wenn das bestimmte Durchsatzniveau (NvDbReq) größer als der Durchsatzschwellenwert (NvDbO) ist.

13. Fahrzeugbeleuchtungssystem (SYS), umfassend:
- mindestens ein Beleuchtungsmodul (MOD), das geeignet ist, Beleuchtungsfunktionen aus komprimierten Bilddaten zu projizieren,
- einen Multiplex-Bus (CAN) zur Übertragung komprimierter Bilddaten an das mindestens eine Beleuchtungsmodul (MOD), und
- ein Steuersystem (SC), das konfiguriert ist, um das Verfahren zur Verwaltung von Bilddaten nach einem der vorhergehenden Ansprüche durchzuführen.

14. Fahrzeugbeleuchtungssystem (SYS) nach dem vorhergehenden Anspruch, wobei das mindestens eine Beleuchtungsmodul (MOD) mindestens eine Halbleiterlichtquelle (PLED), wie LEDs, und insbesondere eine pixelierte LED-Quelle umfasst.

## Claims

1. Method for managing image data in an automotive lighting system (SYS), the lighting system comprising:
- at least one lighting module (MOD) capable of projecting lighting functions from compressed image data, and
- a multiplexed bus of CAN or CAN-FD protocol type (CAN) for transmitting compressed image data to said at least one lighting module (MOD),
the method comprising the following steps:
- receiving a trigger instruction for at least one lighting function (HB, ADB, RW), said at least one lighting function (HB, ADB, RW) being configured to be generated by said at least one lighting module (MOD) from compressed image data corresponding to lighting patterns comprising L rows, L being an integer,
- determining the image data to be compressed among the image data of the lighting patterns of the at least one lighting function (HB, ADB, RW) by selecting the image data of X rows among the L rows of the lighting patterns, X being an integer less than L,
- compressing the image data determined to be compressed,
- transmitting to said at least one lighting module (MOD), via said multiplexed bus (CAN), the compressed image data for generation and projection of the at least one lighting function (HB, ADB, RW)
the method being **characterized in that** it further comprises the following steps
- determining, for the generation of the at least one lighting function (HB, ADB, RW), a required bit rate level (NvDbReq) to transmit on said multiplexed bus (CAN) the compressed image data of all L rows,
- comparing the determined bit rate level (NvDbReq) with a threshold bit rate value (NvDbO) of the multiplexed bus (CAN),
wherein the steps of determining, compressing and transmitting the image data of the X rows are performed when said determined bit rate level (NvDbReq) is greater than said threshold bit rate value (NvDb0),
and wherein the image data of all L rows are compressed and transmitted to said at least one lighting module (MOD) via said multiplexed bus (CAN), when said determined bit rate level (NvDbReq) is less than or equal to said threshold bit rate value (NvDbO).

2. Method according to the preceding claim, wherein in the determination step, the X selected rows are chosen according to a given recurrence among the L rows, every N rows, N being an integer less than L, and X being equal to L divided by N.

3. Method according to the preceding claim, wherein N is equal to 2.

4. Method according to claim 2, wherein N is equal to 3.

5. Method according to claim 2, wherein N is greater than or equal to 4.

6. Method according to any one of the preceding claims, further comprising a step of decompressing the compressed image data, wherein the lighting patterns to be projected are reconstructed from the transmitted compressed image data.

7. Method according to the preceding claim, wherein the decompression step is based on a reconstruction of lighting patterns by linearization between the image data of the X transmitted rows.

8. Method according to claim 6 or 7, wherein the decompression step is based on a reconstruction of lighting patterns by interpolation between the image data of X transmitted rows.

9. Method according to any one of the preceding claims, wherein the L rows correspond to the horizontal lines of the lighting patterns, each row of the L rows comprising at least one line of pixels of lighting patterns.

10. Method according to any one of claims 1 to 8, wherein the L rows correspond to the vertical columns of the lighting patterns, each row of the L rows comprising at least one column of pixels of lighting patterns.

11. Method according to any one of the preceding claims, wherein in the instruction receiving step, at least a first lighting function (ADB) and a second lighting function (RW) are to be triggered, the first lighting function (ADB) being configured to be applied to a first part (P1) of the L rows of the lighting patterns, and the second lighting function (RW) being configured to be applied to a second part (P2) of the L rows of the lighting patterns, distinct from the first part (P1), wherein the steps of determining, compressing and transmitting the image data of the X rows are performed within the first part (P1) of the L rows of the lighting patterns, and wherein the image data associated with the second part (P2) of the L rows of the lighting patterns are, in their entirety, compressed and transmitted to said at least one lighting module (MOD) via said multiplexed bus (CAN).

12. Method according to any one of the preceding claims, wherein following the step of compressing the image data, the method further comprises steps of:
- determining, for the generation of the at least one lighting function (HB,ADB,RW) the required bit rate level (NvDbReq) to transmit the compressed image data on said multiplexed bus (CAN),
- comparing the determined bit rate level (NvDbReq) with the threshold bit rate value (NvDbO) of the multiplexed bus (CAN),
- transmitting to said at least one lighting module (MOD), via said multiplexed bus (CAN), the:
- compressed image data when the determined bit rate level (NvDbReq) is less than or equal to said threshold bit rate value (NvDbO), and the
- image data of the last image transmitted via said multiplexed bus (CAN) when the determined bit rate level (NvDbReq) is greater than said threshold bit rate value (NvDbO).

13. Automotive lighting system (SYS) comprising:
- at least one lighting module (MOD) capable of projecting lighting functions from compressed image data,
- a multiplexed bus (CAN) for transmitting compressed image data to said at least one lighting module (MOD), and
- a control system (SC) configured to implement the image data management method according to any one of the preceding claims.

14. Automotive lighting system (SYS) according to the preceding claim, wherein the at least one lighting module (MOD) comprises at least one semiconductor light source (PLED), such as LEDs, and in particular a pixelated LED source.
